(19) Europäisches Patentamt
European Patent Office
Office européen des brevets

(11) **EP 4 429 339 A1**

(12) **EUROPEAN PATENT APPLICATION**

(43) Date of publication:
**11.09.2024 Bulletin 2024/37**

(21) Application number: **24157800.4**

(22) Date of filing: **15.02.2024**

(51) International Patent Classification (IPC):
***H04W 56/00*** *(2009.01)*

(52) Cooperative Patent Classification (CPC):
**H04W 56/0045;** H04B 17/364

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.02.2023 FI 20235196**

(71) Applicant: **Nokia Technologies Oy**
**02610 Espoo (FI)**

(72) Inventors:
• **TOFT, Morten**
**9230 Svenstrup (DK)**
• **ROM, Christian**
**9210 Aalborg (DK)**
• **CAPORAL DEL BARRIO, Samantha**
**9000 Aalborg (DK)**

(74) Representative: **Script Intellectual Property LLP**
**Suite J, Anchor House**
**School Close**
**Chandlers Ford**
**Eastleigh, Hampshire SO53 4DY (GB)**

(54) **UPLINK TIMING ADVANCE LOOP MANAGEMENT**

(57) Aspects and embodiments relate to an apparatus and methods for uplink timing advance loop management. According to one aspect there is provided an apparatus, for example, user equipment, comprising: means for transmitting, to a network node, an indication that a plurality of timing advance loops are supported; means for receiving, from the network node, a configuration for measuring downlink reference signals; means for performing measurements on the downlink reference signals according to the configuration; means for evaluating, based on the measurements, an indication of a predicted uplink signal quality metric at a further network node based upon use of a common timing advance loop; and means for transmitting, to the network node, an indication of the evaluated indication of a predicted uplink signal quality metric at the further network node. As a result of the method performed by the user equipment, information can be provided to other nodes in a network, for example, network nodes, to facilitate more intelligent selection of use of one or more timing advance loop by the user equipment.

FIG. 8

**Description**

TECHNOLOGICAL FIELD

Various example embodiments relate to apparatus and methods for uplink timing advance loop management.

BACKGROUND

Timing advance (TA) loops are implemented within a network to enable user equipment to control and adjust uplink transmission timing to facilitate alignment of uplink signals at a receiving node. A TA command or value is sent to user equipment by a network to achieve uplink signal time alignment. In a multiple transmission reception point (TRP) enabled network, user equipment may be able to connect to multiple transmission reception points. Some adaptation of timing advance approaches may be required to facilitate operation of user equipment in a multi TRP(m-TRP) scenario.

BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various embodiments of the invention.

According to various, but not necessarily all, example embodiments of the invention there is provided an apparatus, comprising means for transmitting, to a network node, an indication that a plurality of timing advance loops are supported; means for receiving, from the network node, a configuration for measuring downlink reference signals; means for performing measurements on the downlink reference signals according to the configuration; means for evaluating, based on the measurements, an indication of a predicted uplink signal quality metric at a further network node assuming use of a common timing advance loop; and means for transmitting, to the network node, an indication of the evaluated indication of a predicted uplink signal quality metric at the further network node.

According to some embodiments, the means for evaluating the indication of a predicted uplink signal quality metric at a further network node is configured to: evaluate interference at the further network node assuming use of the common timing advance loop.

According to some embodiments, the means for evaluating the indication of a predicted uplink signal quality metric at a further network node is configured to: predict an uplink power delay profile at the further network node based upon reception of a downlink reference signal from each of the network node and further network node and the common timing advance loop.

According to some embodiments, the uplink power delay profile at the further network node comprises: determining the common timing advance loop for communication with the network node; calculating a difference in downlink reference signal reception time between a downlink reference signal received from the network node and a downlink reference signal received from the further network node; estimating a further network node downlink power delay profile based upon the downlink reference signal received from the further network node; and predicting the uplink power delay profile at the further network node based upon the estimated further network node downlink power delay profile, the calculated difference in downlink reference signal reception time, and the determined common timing advance loop.

According to some embodiments, the means for evaluating the indication of a predicted uplink signal quality metric at a further network node is configured to:
evaluate the indication of a predicted uplink signal quality metric at the further network node in dependence upon the predicted uplink power delay profile at the further network node.

According to some embodiments, the means for evaluating the indication of the indication of a predicted uplink signal quality metric at the further network node is configured to evaluate a predicted indication of interference or an indication of uplink signal spread, at the further network node assuming use of the common timing advance loop.

According to some embodiments, the indication of a predicted uplink signal quality metric comprises: predicted inter symbol and carrier interference at the further network node; and/or predicted signal to inter symbol and carrier interference ratio at the further network node; and/or predicted mean delay signal spread at the further network node, and/or a predicted root mean square delay signal spread at the further network node.

According to some embodiments, the configuration for measuring downlink reference signals comprises: an indication of a synchronisation point for the network node resulting from/assuming the common timing advance loop.

According to some embodiments, the apparatus comprises: means to determine a threshold predicted uplink quality metric.

According to some embodiments, the means to determine the threshold predicted uplink quality metric is configured to determine the threshold predicted uplink quality metric based on reception of a radio resource configuration RRC configuration from the network; a dynamic indication from the network; or a preconfigured value known to the apparatus.

According to some embodiments, the apparatus comprises: comparison means for comparing the evaluated indication of a predicted uplink signal quality metric at a further network node against the threshold predicted uplink quality metric.

According to some embodiments, the transmitted indication of the evaluated indication of a predicted uplink signal quality metric at the further network node comprises an indication of whether the predicted uplink signal quality metric is above or below the threshold.

According to some embodiments, the means for evaluating is further configured to assess, based on the indication of predicted uplink signal quality metric at a further network node, whether it is sufficient to use the common timing loop; and wherein the means for transmitting is configured to transmit the indication of the evaluated indication of the predicted uplink signal quality metric at the further network node by indicating whether it is sufficient to use the common timing loop.

According to some embodiments, if the means for evaluating assesses, based on the indication of predicted uplink signal quality metric at a further network node, that it is not sufficient to use the common timing loop; the means for transmitting is configured to transmit the indication of the evaluated indication of the predicted uplink signal quality metric at the further network node by indicating that the common timing loop is insufficient.

According to some embodiments, the means comprise: at least one processor; and at least one memory storing instructions that, when executed by the at least one processor, cause the performance of the apparatus.

According to various, but not necessarily all, example embodiments of the invention there is provided a method, comprising: transmitting, to a network node, an indication that a plurality of timing advance loops are supported; receiving, from the network node, a configuration for measuring downlink reference signals; performing measurements on the downlink reference signals according to the configuration; evaluating, based on the measurements, an indication of a predicted uplink signal quality metric at a further network node assuming use of a common timing advance loop; and transmitting, to the network node, an indication of the evaluated indication of a predicted uplink signal quality metric at the further network node.

According to some embodiments, evaluating the indication of a predicted uplink signal quality metric at a further network node comprises: evaluating interference at the further network node assuming use of the common timing advance loop.

According to some embodiments, evaluating the indication of a predicted uplink signal quality metric at a further network node comprises: predicting an uplink power delay profile at the further network node based upon reception of a downlink reference signal from each of the network node and further network node and the common timing advance loop.

According to some embodiments, predicting the uplink power delay profile at the further network node comprises: determining the common timing advance loop for communication with the network node; calculating a difference in downlink reference signal reception time between a downlink reference signal received from the network node and a downlink reference signal received from the further network node; estimating a further network node downlink power delay profile based upon the downlink reference signal received from the further network node; and predicting the uplink power delay profile at the further network node based upon the estimated further network node downlink power delay profile, the calculated difference in downlink reference signal reception time, and the determined common timing advance loop.

According to some embodiments, evaluating the indication of a predicted uplink signal quality metric at a further network node comprises: evaluating the indication of a predicted uplink signal quality metric at the further network node in dependence upon the predicted uplink power delay profile at the further network node.

According to some embodiments, evaluating the indication of the indication of a predicted uplink signal quality metric at the further network node comprises: evaluating a predicted indication of interference or an indication of uplink signal spread, at the further network node assuming use of the common timing advance loop.

According to some embodiments, the indication of a predicted uplink signal quality metric comprises: predicted inter symbol and carrier interference at the further network node; and/or predicted signal to inter symbol and carrier interference ratio at the further network node; and/or predicted mean delay signal spread at the further network node, and/or a predicted root mean square delay signal spread at the further network node.

According to some embodiments, the configuration for measuring downlink reference signals comprises: an indication of a synchronisation point for the network node resulting from the common timing advance loop.

According to some embodiments, the method comprises: determining a threshold predicted uplink quality metric.

According to some embodiments, determining the threshold predicted uplink quality metric comprises determining the threshold predicted uplink quality metric based on reception of a radio resource configuration RRC configuration from the network; a dynamic indication from the network; or a preconfigured value known to the apparatus.

According to some embodiments, the method comprises: comparing the evaluated indication of a predicted uplink signal quality metric at a further network node against the threshold predicted uplink quality metric.

According to some embodiments, the transmitted indication of the evaluated indication of a predicted uplink signal quality metric at the further network node comprises an indication of whether the predicted uplink signal quality metric is above or below the threshold.

According to some embodiments, evaluating further comprises assessing, based on the indication of predicted uplink signal quality metric at a further network node, whether it is sufficient to use the common timing loop; and transmitting comprises transmitting the indication of the evaluated indication of the predicted uplink signal quality metric at the further network node by indicating whether it is sufficient to use the common timing loop.

According to some embodiments, if evaluating results in an assessment, based on the indication of predicted uplink signal quality metric at a further network node, that it is not sufficient to use the common timing loop; the method comprises transmitting the indication of the evaluated indication of the predicted uplink signal quality metric at the further network node by indicating that the common timing loop is insufficient.

A computer program product operable, when executed on a computer, to perform a method comprising: transmitting, to a network node, an indication that a plurality of timing advance loops are supported; receiving, from the network node, a configuration for measuring downlink reference signals; performing measurements on the downlink reference signals according to the configuration; evaluating, based on the measurements, an indication of a predicted uplink signal quality metric at a further network node assuming use of a common timing advance loop; and transmitting, to the network node, an indication of the evaluated indication of a predicted uplink signal quality metric at the further network node.

A non-transitory computer-readable medium storing computer program code including instructions that, when executed by a processor, cause apparatus to perform the steps of: transmitting, to a network node, an indication that a plurality of timing advance loops are supported; receiving, from the network node, a configuration for measuring downlink reference signals; performing measurements on the downlink reference signals according to the configuration; evaluating, based on the measurements, an indication of a predicted uplink signal quality metric at a further network node assuming use of a common timing advance loop; and transmitting, to the network node, an indication of the evaluated indication of a predicted uplink signal quality metric at the further network node.

Assuming use of a common timing advance loop may be considered in some embodiments as the hypothesized or tentatively assumed use of the loop.

According to some embodiments, the network node and further node may comprise different physical nodes, for example different TRPs. Accordingly, embodiments may relate to, for example, two timing advance loops for supporting two Transmission Configuration Indicator States (TCIs) and each timing advance loop may be associated with communication with a different TRP. According to some embodiments, the network node and further network node may comprise the same physical node, and the different "nodes" are represented by two TCIs of the same TRP. Accordingly, a network node according to some embodiments may comprise a TCI beam associated with a network node, for example, TRP, and a different node (for example, further network node, in accordance with some embodiments), may comprise a different TCI beam associated with the same physical network node, for example, the same TRP.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

## BRIEF DESCRIPTION

Some example embodiments will now be described with reference to the accompanying drawings in which:

FIG. 1A illustrates schematically a general wireless communication system network architecture;

FIG. 1B illustrates schematically a relationship between downlink frame and uplink frame timing;

FIG. 2 illustrates graphically the contribution of a UE transmitted signal to signal power in dependence upon arrival time at a receiving node;

FIG. 3 made up of FIGS. 3A to 3D which illustrate graphically four examples of different estimated Power Delay Profiles

FIG. 4 illustrates schematically a UE which is configured to receive from two TRPs in a mTRP network; FIG. 4 is made up of FIG. 4A to 4C which illustrate schematically timing of uplink and downlink signals at both a UE and two TRPs in the case that the UE implements a single Timing Advance (TA) value;

FIG. 5 is made up of FIGS. 5A to 5E which illustrate example Power Delay Profiles (PDPs) from and to different TRPs depending on whether 1 or 2 Timing Advance Loops are implemented by a UE and FIG. 5F which illustrates schematically a UE which is configured to receive from two TRPs in a mTRP network;

FIG. 6 illustrates graphically an example of how a predicted UL quality metric (for example, P-SI$_{\text{ISCI}}$R) for a UE operating using a single TA loop decreases as time difference of arrival of a UE UL signal increases between 2 TRPs;

FIG. 7 is a signalling diagram indicating signalling between a network and user equipment in accordance with two possible arrangements;

FIG. 8 is a flowchart illustrating schematically steps of some arrangements as implemented at a UE;

FIG. 9 illustrates graphically a numerical example of predicted UL signal quality metric example calculation;

FIG. 10 illustrates graphically how a predicted UL signal quality metric changes as a difference in propagation delay increases;

FIG. 11 illustrates schematically some components of a network including nodes according to some arrangements; and

FIG. 12 illustrates schematically steps of methods performed in accordance with some arrangements.

DETAILED DESCRIPTION

Before discussing aspects in any more detail, first an overview of the context in which aspects are to be understood will be provided.

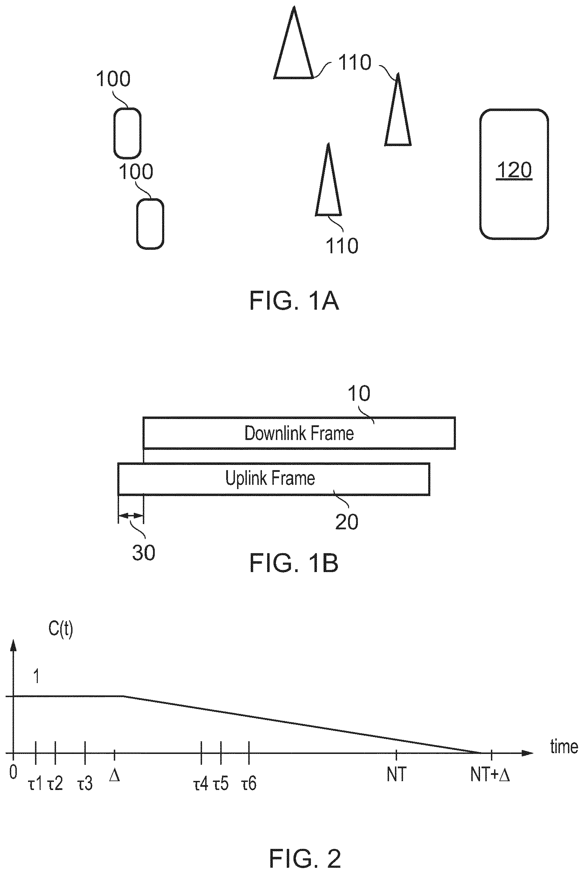

FIG. 1A illustrates schematically a general wireless communication system network architecture. Whilst arrangements are described in relation to one possible network architecture, it will be appreciated that the principles of operation in accordance with arrangements may be applied across a range of network architectures without undue burden. In particular, arrangements are described in relation to an access architecture based on long term evolution advanced (LTE Advanced, LTE-A) or new radio (NR), also known as fifth generation (5G), network architectures, but arrangements are not envisaged to be restricted to such an architecture.

Examples of other architectures and systems include, for example, universal mobile telecommunications system (UMTS) radio access networks (UTRAN or E-UTRAN); long term evolution networks (LTE); architectures including Non-terrestrial Networks (NTN); wireless local area network (WLAN or WiFi) networks and similar.

FIG. 1A illustrates schematically some main components of an example radio access network. Typically a network will comprise a plurality of User Equipment (UE) devices 100.

A UE 100 typically comprises a portable computing device that includes wireless mobile communication functionality. UE devices include, but are not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. A UE device may include machine type communication devices (MTC devices) and various devices which have capability to operate in an Internet of Things (IoT) network.

The UEs are configured to be in wireless communication with one or more network access node 110. The network access node, for example, gNB, provides a radio frequency region of coverage called a cell. UE communicate with the network access nodes using one or more communication channels in a cell. The radio communication link from UE towards a network node is called uplink (UL) and the radio communication link from a network node towards a UE is called downlink (DL).

A communication system typically comprises more than one network access node. Those network access nodes may also be configured to communicate with one another over links, wired or wireless and form the "network side" of the architecture. The network side nodes may include a computing device configured to control the radio resources of the communication system. The network access node may also be referred to as a base station (BS), an access point or similar.

A network access node 110 typically comprises, or is coupled to, a transceiver. From a transceiver of a network access node, a connection is provided to an antenna unit that establishes bi-directional radio links to UE 100. The antenna unit may comprise a plurality of antennas or antenna elements. The network access nodes are typically also connected to core network 120.

Some networks allow UEs to establish concurrent connection to more than one network access node, or "Transmission and Reception Point" (TRP). In a multi-TRP scenario, UE are able to connect to multiple transmission reception points (TRPs).

Beam management techniques are used when UE form an initial connection with a network, and ongoing management occurs while the UE is in connected state. In connected state, operation of transmitting beams and receiving beams may be refined. Beam management defines a set of functionalities to assist UE when setting parameters of reception (Rx) and transmission (Tx) beams for downlink reception and uplink transmission, respectively.

Timing Advance Background

When a UE is communicating with a TRP the propagation delay for a radio frequency (RF) signal to travel the distance between the TRP and the UE and vice versa will delay the signal in both Downlink (DL) and Uplink (UL) directions. In order for a TRP to decode a signal from multiple UE, each having different distances to the TRP and hence different propagation delays, a timing advance (TA) procedure is provided.

According to the TA procedure, each UE is requested to advance its UL signal transmission in order for it to be received at a defined time at the TRP. That is to say, transmission times of each UE are selected such that substantially simultaneous arrival at a TRP is achieved. All UEs of a TRP are then synchronized such that each gNB has a single Fast Fourier Transform (FFT) timing for all the incoming signals from different UEs. In other words, different UEs have a shared target synchronization point. Inter symbol interference occurs if the UEs do not have a shared synchronisation point. Multiple UL symbols overlap if signals from multiple UEs are not received aligned. That is to say, without alignment, cross-user interference may occur.

Furthermore, the TA loop mechanism operates to try to ensure that an UL signal received at the TRP will have no overlap with a subsequent DL transmission.

The different UEs connected to the same TRP apply a dedicated TA value per UE, hence all signals will arrive at the TRP in sync, and with minimum inter-symbol overlap.

The DL signals from the TRP arrive at the different UEs at different time instances depending on the different propagation delays.

FIG. 1B illustrates schematically a relationship between downlink frame and uplink frame timings as well as an indication of how a timing advance offset operates. As shown in FIG. 1B an offset 30 is applied to uplink frames 20, but not downlink frames 10. Timing advance is a negative offset 30, typically applied at the UE, between the start of a received downlink subframe 10 and a transmitted uplink subframe 20. This offset at the UE is necessary to ensure that the downlink and uplink subframes are synchronised at the network side. Typically the Timing Advance (TA) offset 30 is equal to 2 x propagation delay determined to apply between the network side and a UE and assumes that the same propagation delay value which is determined in relation to the downlink also applies to the uplink direction.

Implementing a Timing Advance enables an alignment in time of UL signals from different UEs to the same TRP. In FR2 New Radio (NR) having a Sub-Carrier Spacing (SCS) of 120 kHz, the Cyclic Prefix (CP) is 590 ns. The TA step size is 65.1 ns, hence there are approximately 9 steps within the CP length. In the Timing Advance Command, which is sent in a Medium Access Control (MAC) Control Element (CE), the UE can be requested to change the UL timing by up to +/- 31 times the step size mentioned above. The length of the step size is the limit of the accuracy that the gNB can time align an UL signal from one UE, inside the gNB CP receive window. In RAN4, 3GPP has defined a minimum synchronization for the case of Carrier Aggregation (CA) in intra-band Contiguous, that minimum synchronisation being 260ns.

## UL quality evaluation in mTRP scenarios when channel delays are outside CP

In OFDM modulated signals each OFDM symbol, in time, consists of a data sequence preceded by a cyclic prefix (CP). The cyclic prefix is a copy of the last part of the FFT-modulated data sequence, and it is designed to extend the range of multipath delays within which the subcarriers of the OFDM symbol can remain orthogonal. In other words, if all the multipath delays of the channel are within the CP then the receiver can maintain orthogonality between subcarriers as long as adequate synchronization has been performed.

In general, if the delays are all captured within the CP length, the receiver will see full orthogonality between consecutive OFDM symbols as well as between subcarriers of same OFDM symbol leading to no signal degradation. However, if any multipath delays are larger than the CP length the received signal performance will suffer from both inter-symbol and inter-subcarrier interference.

Examples of theoretical background to properly describe analytically the amount of interference relative to the signal power in a CP-OFDM system include:

[1] H. Steendam, M. Moenclaey, "Analysis and Optimization of the Performance of OFDM on Frequency-Selective Time-Selective Fading Channels," IEEE Trans. Commun. vol. 47, pp. 1811-1819, dec. 1999 and
[2] M. Batariere, K. Braum, T. P. Krauss "Cyclic Prefix Length Analysis for 4G OFDM Systems," VTC'04, Los Angeles, USA, sept. 2004 and can be expressed as a Signal to Interference and Noise Ratio (SINR).

From [1] the following expression of SINR can be found:

$$SINR = \frac{P_s}{P_i + \sigma_w^2}$$

In this document $SI_{ISCI}R$ is defined such that:

$$SI_{ISCI}R = SINR$$

Where the desired signal power ($P_s$) is given by:

$$P_s = \sum_{i=0}^{N_t-1} C(\tau_i)^2 E\{|\boldsymbol{a}[i]|^2\}$$

And the interference power ($P_i$) is given by:

$$P_i = \sum_{i=0}^{N_t-1} \left(1 - C(\tau_i)\right)^2 E|\boldsymbol{a}[i]|^2$$

$$ISCI = P_i$$

FIG. 2 illustrates graphically the contribution of a UE transmitted signal to signal power in dependence upon arrival time at a receiving node. It can be seen that whether a signal contributes to the received signal, or whether it is seen as interference depends upon whether it is received at a receiving node before or after expiry of one CP period. The weight function C($\tau$) (FIG. 2) is used to weigh the individual delay taps according to their position in the OFDM symbol.
When all the delay taps ($\tau$1, $\tau$2, $\tau$3) are within a CP at a receiving node (between 0 and $\Delta$ in FIG. 2) and have a weight of 1, they contribute only to the signal power ($P_s$), and not to the interference power ($P_i$).
When delays are between the CP (i.e. >$\Delta$) and the full OFDM symbol length (NT) (e.g. $\tau$4, $\tau$5, $\tau$6), the weighting gradually changes from signal power to interference power.
The above equation for $\boldsymbol{P_i}$ is referred to herein as ISCI (Inter Symbol and Carrier Interference), and P-ISCI is the Predicted Inter Symbol and Carrier Interference. It is a calculation of the inter symbol and inter carrier interference power caused by having delay taps outside the CP length.
Another measure used herein is: Average Delay Spread (DS$_{mean}$), defined as:

$$DS_{mean} = \bar{\tau} = \frac{\sum_{i=0}^{L-1} g_i \tau_i}{\sum_{i=0}^{L-1} g_i}$$

And the Root Mean Square Delay Spread (DS$_{rms}$)

$$DS_{rms} = \sqrt{\frac{\sum_{i=0}^{L-1} |a_i|^2 (\tau_i - \bar{\tau})^2}{\sum_{i=0}^{L-1} |a_i|^2}}$$

Where $g_i = |a_i|^2$, and $\tau_i$ is the delay of each delay tap in the PDP (Power Delay Profile).

$$\sigma_w^2$$

( ) is the variance of the white gaussian noise, assumed to be zero herein.

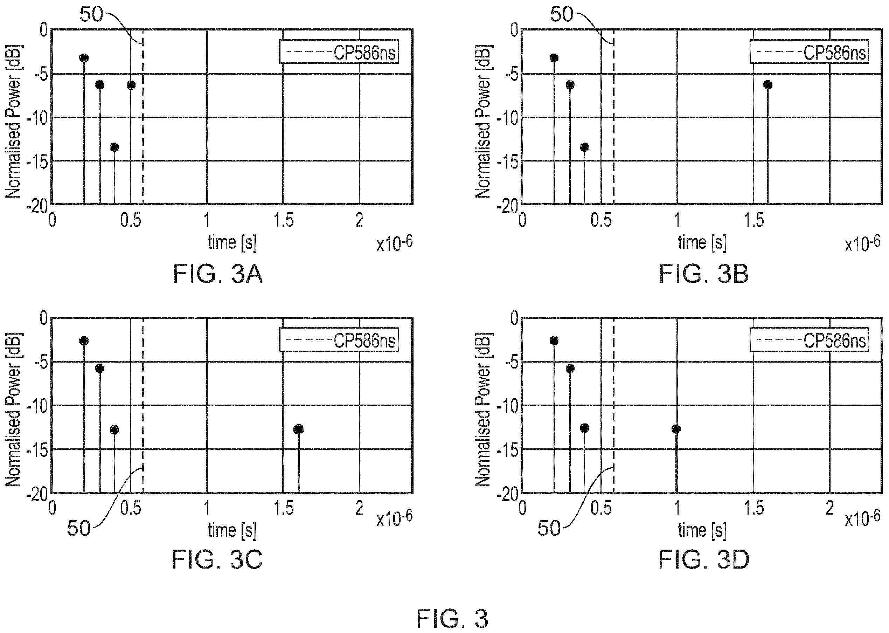

FIGS. 3A to 3D illustrate graphically four examples of different estimated Power Delay Profiles and the consequence of their arrival time inside, or outside a cyclic prefix (CP) length 50. The table below sets out an associated calculated predicted quality for each example.

| | a) | b) | c) | d) |
|---|---|---|---|---|
| **P-SI$_{ISCI}$R** | 40 dB | 12.4 dB | 18.6 dB | 22.4 dB |
| **P-ISCI** | -40 dB | -12.6 dB | -18.7 dB | -22.4 dB |
| **P-DS$_{mean}$** | 302ns | 565ns | 321ns | 286ns |
| **P-DS$_{rms}$** | 123ns | 582ns | 326ns | 189ns |

Each PDP of FIG. 3 comprises 4 delay taps having the following features:

FIG. 3A: all delay taps are within the CP length, no interference and P-SI$_{ISCI}$R=40dB (maximum of hardware capability)
FIG. 3B: one delay tap at -6dB is outside CP at 1.6us; P-SI$_{ISCI}$R=12.4dB
FIG. 3C: one delay tap outside CP is lowered to -12dB; P-SI$_{ISCI}$R=18.6dB
FIG. 3D: the single delay tap outside CP has lower delay 1us, hence lower P-SI$_{ISCI}$R=22.4dB

In all examples of FIG. 3A to 3D it is assumed that the first delay is positioned at 1/3 CP. That means assuming that the gNB will align the timing of the UL signal (for example, by using the Timing Advance procedure) from the UE, so that the first reflection is positioned 1/3 within the CP at the gNB receiver. The UL timing alignment is controlled by the gNB using the timing advance command (TAC). The 1/3 is introduced to allow for some robustness at the receiver to timing errors related to synchronisation, and it is a common value used in 3GPP. However, the actual synchronization point in the gNB hardware is gNB implementation specific.

The interference considered here is the inter-symbol and inter subcarrier interference caused by the signal taps received outside of the CP.

The significance of appropriate application of a Timing Advance by UE within a network can therefore be appreciated.

Aspects described in more detail below seek to address consequences of multi Timing Advance (multi-TA) functionality that is to be provided in wireless communication networks. It may be desirable to enhance multi-TRP operation especially in FR2 frequency range in cases where a UE has capability to use two uplink (UL) streams from two panels for simultaneous transmission either to one or two receiving TRPs.

Multi-TRP (mTRP) is a significant feature for beam management. 3GPP Rel-16 deals with mTRP for simultaneous Physical Downlink Shared Channels (PDSCH) with single Downlink Control Information (DCI) (for both Frequency Division Multiplexing (FDM) & Space Division Multiplexing (SDM)); Rel-17 supports mTRP for Physical Uplink Control Channels (PUCCH) and & Physical Uplink Shared Channels (PUSCH) with Time Division Multiplexing (TDM). Rel-18 will address simultaneous PUCCH & PUSCH and UE multi-panel transmissions. In this context Timing Advance (TA) is an issue to be addressed.

It is possible to allow 2 parallel Timing Advance values for mTRP multi-DCI configured UE.

UL Timing in mTRP scenarios

It is possible for a UE to have a capability to use either single or multiple TA loops

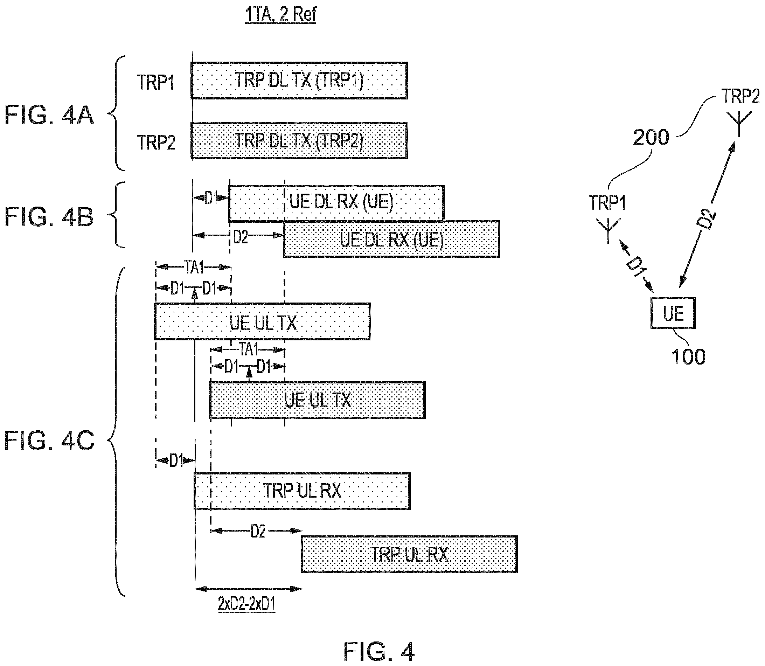

FIG. 4 illustrates a UE 100 in communication with two TRPs 200. The TRPs are each a different radio propagation delay from the UE 100. TRP1 is a propagation delay of D1 away from UE 100 and TRP2 is a propagation delay of D2 away from UE 100.

FIG. 4A to 4C illustrate schematically timing of uplink and downlink signals at both a UE and two TRPs in the case that the UE 100 implements a single TA value (i.e. 1 TA) for the two TRPs TRP1, TRP2, each TRP 200 having its own reference time.

FIG. 4A shows the timing of two DL signals from two TRP as they are transmitted simultaneously from the two TRPs. The implementation shown in FIG. 4A relates to a network using FR2, operating in Time Division Duplexing (TDD) bands and therefore it is assumed that all TRPs are synchronized in time.

FIG. 4B shows the timing at a UE, and the two DL signals from the two separate TRPs are likely be received at different times due to the different distances and radio propagation characteristics between the UE and each of the two TRPs. D1 is the (one way) propagation delay between TRP1 and the UE, and D2 is the (one way) propagation delay between TRP2 and the UE.

FIG. 4C illustrates that a UE 100 is configured such that the UL transmission time will be advanced, relative to the received time, by a single timing advance TA1. The UE UL signal for TRP1 is transmitted at 2xD1=TA1 time before the reception of the signal from TRP1, hence at TRP1 the UE UL signal is received in substantial alignment with the DL signal.

If the UE is configured to operate using a single TA loop, the UE UL signal for TRP2 is also transmitted 2xD1 (TA1) time before the reception of the signal from TRP2, hence as illustrated in the figure the UL signal to TRP2 is received at TRP2 with a time difference of (2xD2 - 2xD1) thus introducing a lack of synchronization at TRP2 relative to TRP1.

In the example shown in FIG. 4, the timing of the transmitted signal from the 2 TRPs is synchronous. The timing of reception of the DL signal at the UE depends on propagation delay. Relative to the UE DL receive time, the UL signal is transmitted by the UE using a single TA loop i.e. a timing advance that is time shifted by the TA value relative to one TRP-specific DL UE reception, e.g. corresponding to D1 in the case of single TA aligned with TRP1.

Numerical Example:

Assuming a distance between UE and TRP1 of 30m, and a distance between UE and TRP2 of 80m.

The delay values D1 and D2 are: D1 = 100ns and D2 = 267ns. With this example, the UL signal for TRP2 will be received at the TRP2 with a delay given by

$$2xD2-2xD1 = 2x267ns-2x100ns = 334ns$$

It can be understood from FIG. 4 that a single TA loop in a mTRP network may not be suited to efficient UE operation. To improve overall operation of a mTRP network, a UE may be provided with a multi-TA loop capability. That multi-TA loop capability may be used, for example, in relation to FR2.

As set out below, it is possible to make an estimation or calculation of a contribution of one or more signals, whether received inside or outside CP, as well as a level of inter-symbol and inter subcarrier interference from signals received outside the CP length, for a given channel PDP. This signal quality is expressed in SINR for each channel instance. In general, the more of the channel delay power that is located outside the CP length, the lower SINR the receiver will get. Nonetheless, a simple calculation based only on CP length may not be representative of whether it would be advantageous for a UE or network to implement multi-TA capability.

Summary of Context

The following different metrics, all describing a Power Delay Profile (PDP), have been introduced:

$SI_{ISCI}R$ : Signal to Interference Ratio, where interference is the interference caused by the Inter Symbol and Inter Carrier (*ISCI*), due to PDP taps outside CP length.

*ISCI* : Inter Symbol and Inter Carrier Interference. A measure of the power of the Inter symbol and Inter Carrier interference due to PDP taps outside CP length.

$DS_{mean}$ : Defines the average delay of the different taps in a Power Delay Profile (PDP).

$DS_{rms}$ : Defines the spread of the different taps in a Power Delay Profile (PDP).

Herein $P - SI_{ISCI}R$, $P - ISCI$, $P - DS_{mean}$ and $P - DS_{rms}$ are used to refer to the UE predicted version of the different metrics referred to above.

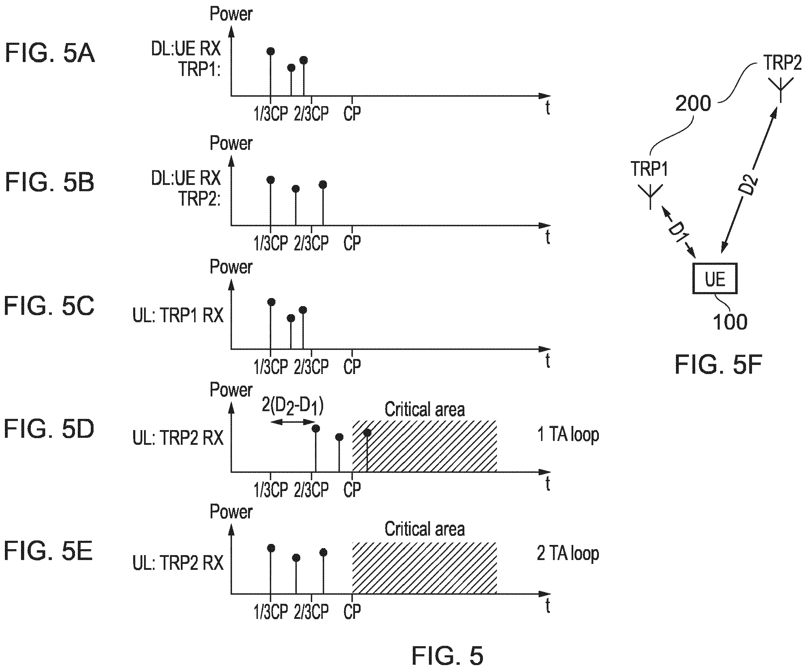

FIGS. 5A to 5E illustrate example Power Delay Profiles (PDPs) from and to different TRPs depending on whether 1 or 2 Timing Advance Loops are implemented in the scenario illustrated schematically in FIG. 5F.

FIG. 5F illustrates a UE 100 in communication with two TRPs 200. The TRPs are each a different radio propagation delay from the UE 100. TRP1 is a propagation delay of D1 away from UE 100 and TRP2 is a propagation delay of D2 away from UE 100

FIG. 5A illustrates schematically an example of the UE estimated Power Delay Profile (PDP) for downlink (DL) signals coming from TRP1. The first reflection is aligned with 1/3 CP.

FIG. 5B illustrates schematically an example of the UE estimated PDP for downlink signals coming from TRP2. The first reflection is again aligned with 1/3 CP.

FIG. 5C illustrates schematically an example of a TRP1 estimated PDP based upon an uplink signal transmitted by the UE. The Timing Advance TA of UE 100 is "set" by the closest TRP, namely TRP1, and the UE is configured to make uplink transmissions with a Timing Advance (TA) of 2xD1, such that the first reflection received at TRP1 from the UE 100 is approximately aligned with 1/3 CP.

FIG. 5D illustrates schematically an example of the TRP2 estimated PDP for the UL signal from the UE 100 in the case that the UE is configured to apply one TA loop. Since the single TA loop is aligned to TRP1, and because TRP1 and TRP2 are different distances from the UE and therefore have different radio propagation delays, the first reflection at TRP2 is delayed by that different distance from UE to the two TRPs 2(D2-D1). The result is that part of the PDP may be subject to a delay which is greater than the CP length and hence can potentially interfere/corrupt the data symbols. In the example shown in FIG. 5D one delay tap is likely received at TRP2 from the UE 100 in the critical area where inter symbol and inter carrier interference will be generated.

FIG. 5E illustrates schematically an example of the TRP2 estimated PDP for the UL signal from the UE in a case where the UE is configured to apply two TA loops. Accordingly, the UE 100 may be configured to use a TA of 2xD2 in communication with TRP2. Because 2 TA loops are enabled, implementation by the UE of the second TA loop for TRP2 can help to ensure that the first delay tap in the PDP at TRP2 is kept at around 1/3 CP.

Arrangements recognise that whilst being outside the CP length, as shown in FIG. 5D, is an indicator of whether any inter symbol and inter carrier interference may be generated, the functional significance of that interference may differ. In particular, being outside the CP may cause minimal interference, depending upon how far outside the CP the UE uplink signal falls. Similarly, depending upon hardware capability, a TRP may be able to tolerate a degree of interference, even if the UE uplink signal falls outside the CP. In such a scenario, it may not be advantageous to overall network efficiency for the UE and network to implement a multiple TA configuration.

In other words, the simple metric of being received inside or outside CP is not an accurate enough metric to decide on whether a UE should be a user of a 1 or 2 TA loop configuration. Indeed, even when the signal is received outside of CP, it may still be decoded by gNB though SINR is degraded. Arrangements described herein recognise that it may be useful to implement a different metric to facilitate an assessment of whether it may be advantageous to overall network operation to implement a single or multiple loop TA loop configuration.

Before discussing the example embodiments in any more detail, first an overview of arrangements will be provided.

Arrangements described relate to enhancements to the decision mechanism in support of whether to configure a single or more TA loop in support of m-TRP operation.

Arrangements recognise that a UE may be configurable to support calculation of an estimate of a predicted UL quality metric for simultaneous UL transmission, for example, on groups of Transmission Configuration (TCI) states. According to one example, the TCI states may be identified by their corresponding Downlink Reference Signal (DL RS) and the predicted UL quality may be based on calculations based upon factors including, for example, UL time alignment versus CP length for a single TA loop. The output of such calculation(s) may be compared, for example by a UE, or by the network, against a threshold UL quality metric. That comparison against a threshold may be used as a criteria against which a network or UE can assess whether one or more TA loops are most appropriate for implementation by the UE within the network. For example, arrangements may provide a threshold of predicted UL quality against which the UE or network can assess whether implementation of a single or multiple TA loops would provide efficient operation.

According to arrangements described, a UE may be configured to evaluate, measure or report one of more parameter which allow for calculation of a predicted UL quality at a TRP. The calculation of predicted UL quality can comprise a calculation of one or more quality metric. The calculated quality metric may comprise, for example: a predicted Inter-Symbol-and-Carrier-Interference (P-ISCI) where the ISCI is the inter-Symbol plus inter-Carrier Interference power caused by UL timing misalignment at a TRP when using 1 TA loop. Alternatively, the calculated quality metric may comprise a predicted $SI_{ISCI}R$, where the interference power $I_{ISCI}$ is that which is solely attributable to the ISCI. $SI_{ISCI}R$ is defined as a Signal to Interference Ratio, when taking into account an UL signal misalignment at a TRP caused by using 1 TA loop.

Arrangements described may utilise one or a combination of the following metrics and definitions in support of calculation of one or more predicted UL quality metric:

P-ISCI (Predicted Inter Symbol sub-Carrier Interference)
P-$SI_{ISCI}R$ (Predicted Signal to Interference (Inter Symbol and-Carrier) Ratio)
P-DSrms (Predicted Delay Spread RMS)
P-DSmean (Predicted Delay Spread mean)

Arrangements recognise that a UE can be configured to measure, report or assess one or more operational characteristic of the network. Those operational characteristics may be used to calculate, estimate or predict the one or more UL quality metric. The UL quality metric may be assessed, calculated or estimated for groups of TCI states.

According to arrangements, UE may be configured to perform the assessment or calculation of an UL quality metric explicitly and then reporting it to the network or may implicitly report it to the network by indicating a preference for a single or multiple TA loop, or the UE may report the measured, reported or assessed one or more operational characteristic of the network relating to downlink reception, such that the network may itself be configured to make an assessment or calculation of a predicted UL quality metric associated with the UE which can then be used to determine whether or not a UE is a candidate for implementation of a single or multiple TA loop .

Arrangements recognise that assessment of a predicted UL quality at a TRP can be used to assist a gNB when making a choice between, for example, 1 or 2 TA loops in relation to a UE. The calculated UL quality metric may represent a cost in SINR of decoding signal tap(s) which arrive at a TRP from a UE outside of CP length due to implementation at the UE of a single TA loop.

By way of example, if a predicted UL quality (e.g. P-$SI_{ISCI}R$) for 1 TA loop is calculated and determined to be sufficient to allow for successful decoding of the signal by the gNB, then use of a single TA loop may be selected or maintained. Alternatively, if the estimated UL Quality is calculated to not meet a sufficient threshold, a gNB may be operable to decide to use, for example, 2 TA loops. In some arrangements, if the estimated UL signal quality at a TRP is calculated to be insufficient and does not meet a predetermined threshold, a UE may be configured to to indicate a preference for implementation of operation using 2 TA loops.

According to arrangements, the estimated UL signal quality at a TRP is based upon measurements and parameters determinable at the UE. For example, a UE may be configured to calculate an estimate of UL quality at a TRP from measured DL RS. In an estimated UL SINR, signal estimation may be based on reciprocity and the interference estimation may only consider inter-symbol interference from tap(s) detected after the end of CP length at the TRP of interest. Neighbour cell interference experienced at a gNB can be handled directly by gNB and is, according to arrangements, largely irrelevant and independent of a1 vs 2 TA loop decision.

Arrangements recognise that measurements made at the UE can be utilised to make an estimate of a predicted UL signal quality metric at a TRP. That estimation or prediction of UL signal quality may allow, in some implementations, a UE to assess and directly indicate to network whether the amount of signal power received outside the CP length for given propagation delays is critical to UL mTRP transmission or not and therefore support a decision making process of whether a capable UE could benefit from implementation of, for example, a second TA loop.

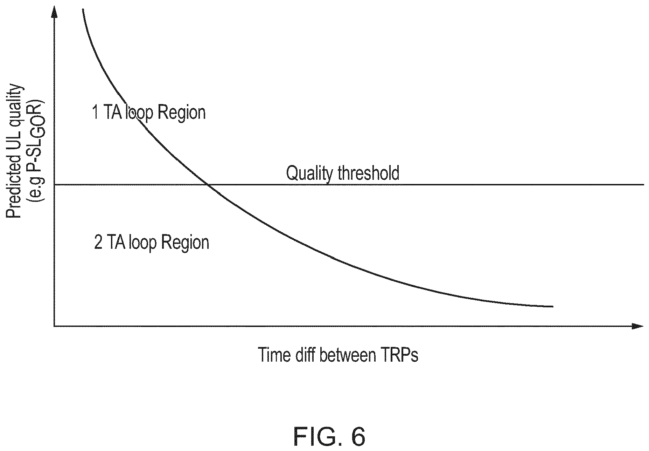

FIG. 6 illustrates graphically an example of how a predicted UL quality metric (for example, P-SI$_{ISCI}$R) for a UE operating using a single TA loop decreases as time difference of arrival of a UE UL signal increases between 2 TRPs.

According to arrangements described, a predicted UL quality metric value is calculated. FIG. 6 illustrates generally the degradation of predicted UL quality metric as propagation delay difference between a UE and TRPs increases. The prediction may be directly calculated by the UE and reported to network explicitly or implicitly.

According to arrangements described, the time difference of arrival can be calculated by a UE using, for example, the DL RS of each TCI state. Reciprocity in the downlink/uplink arrangement and beam correspondence is assumed, for example in a TDD FR2 system. By way of example, a time difference between signals received from different TRPs may be calculated by a UE based on a measurement from first tap to first tap of each received DL RS for each TCI state.

FIG. 6 shows a horizontal "threshold". That line is representative of a predicted UL quality metric representative of when a transition between single or multiple loop TA may be beneficial to operation of the UE within the network. When the predicted UL quality metric is above the threshold, a single TA loop implemented by the UE is likely to be sufficient to ensure the UE can transmit successfully with insignificant ISCI to, for example, 2 TRPs. Conversely, when the predicted UL quality metric is below the threshold, it may be beneficial for the UE needs to be configured with 2 TA loops so that the 2 TRPs can successfully receive transmissions made by the UE.

Whilst assessing whether a radio propagation delay between a UE and a TRP, together with a value of a single TA implemented by a UE against CP length offers one measure against which it is possible to decide whether there is a requirement to implement a further TA loop, arrangements described herein recognise that the transition point may be more accurately assessed if the impact of falling outside the CP length, and capabilities of network nodes involves in the communication can be taken into account.

Accordingly, arrangements described introduce implementation of a predicted uplink quality metric threshold and associated signalling. According to arrangements, an acceptable level (threshold) relating to a predicted UL quality metric for implementation of a single TA loop at a UE may be decided by, for example, the gNB. That threshold may be signalled to the UE. Alternatively, the threshold may be selected as a UE requirement and specified.

In summary, arrangements provide that, according to some implementations, a UE is configured to support introduction of a predicted uplink signal quality threshold against which a decision regarding whether or not it could be advantageous to implement more than a single TA loop can be assessed. The threshold may be introduced to network operation in various ways, including, for example, by means of: RRC configuration from network; dynamic indication from network e.g. MAC or DCI; pre-determined value in specification text; or a UE chosen value which is reported to the network.

Arrangements may provide implementations according to which a UE may be configured to calculate a predicted UL quality metric for m-TRP operation if the UE operates with a single TA loop. The UE may be configured to make such a calculation for example, for groups of TRPs for simultaneous UL transmissions. The calculation of predicted UL signal quality metric may be, for example, based upon one or more characteristic of operation measurable at the UE. Such a characteristic may, for example, include measurement from a Transmission Configuration Indicator (TCI) Downlink Reference Signal (DL RS), for example, Synchronization Signal Block (SSB) or Channel Status Information Reference Signal (CSI-RS).

Arrangements may provide implementations according to which a UE may be configured to report a calculated predicted UL quality metric to a network. The report may be an explicit report of a calculated value, for example, the UE may be configured to report a predicted UL quality metric. Alternatively, the UE may be configured to report a predicted UL quality metric implicitly, for example, by indicating whether the calculated value has passed a threshold or not, or in the form of part of a TA loop indication (single loop or more than one loop) for groups of TCI states.

In other words, arrangements may provide for implementations according to which a UE may be configured to directly indicate a calculated predicted UL quality metric to a gNB. Alternatively, a UE may be configured to compare the calculated predicted UL quality metric against a threshold. Based upon that comparison, the UE may be configured to indicate a preference for operation using, for example, 1 or 2 TA loops from the gNB accordingly. The calculated predicted UL quality metric is used to provide information regarding, for example, each TCI combination, allowing an assessment to be made as to whether it is more appropriate for the UE to use a single or more than one TA loop.

Functionally, the predicted UL quality metric represents an indication of UL quality a gNB can expect if the UE uses a single TA loop, when taking into account likely interference, for example, inter-symbol and/or inter-subcarrier interference (i.e. ISCI) caused by UL time misalignment.

In implementations of arrangements in which an acceptable (threshold) level of a predicted UL quality metric is determined or selected by a gNB, the gNB may be configured to make such a determination or selection based on a range of factors. Such factors may, for example, include: use case; type of data; QoS; hardware capability or similar. According to implementations of arrangements, and as described in more detail below, a network may be operation either to compare a UE reported predicted UL quality metric against a determined or selected threshold or to configure the UE to compare the calculated UL quality metric with a selected or determined UL quality threshold and report the result of such a comparison.

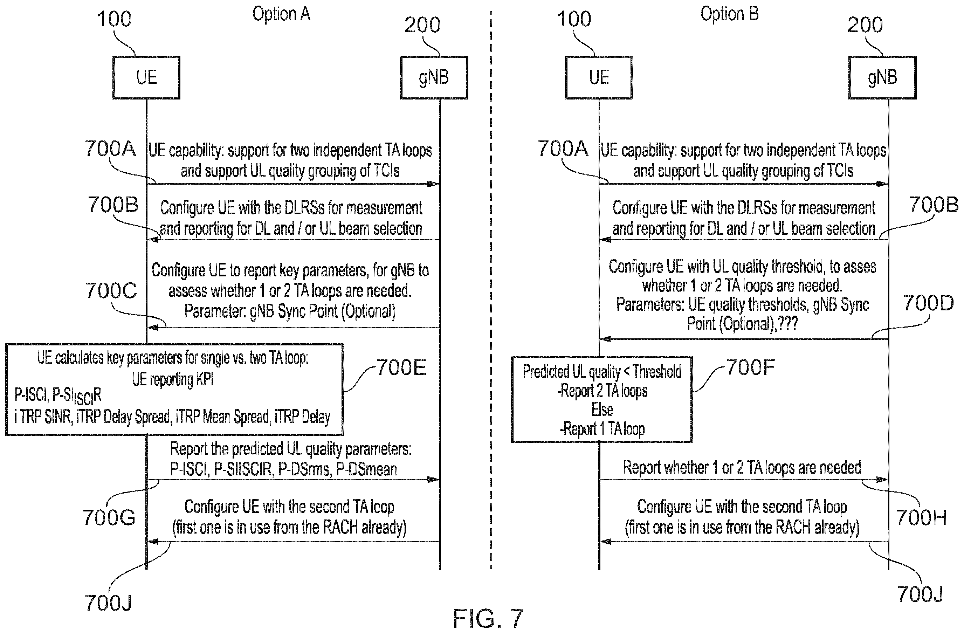

FIG. 7 is a signalling diagram indicating signalling between a network 200 and user equipment 100 in accordance with two possible arrangements. As shown in FIG. 7, information may be provided such that an assessment of whether the user equipment may operate more efficiently within the network under a single or multiple TA loop implementation. Such information may be provided to support a decision as shown in, for example, the two implementations represented schematically in FIG. 7.

Option A

According to the first implementation shown in FIG. 7, a network node 200, for example, gNB, is configured to use a reported predicted UL quality metric (for example, P-SI$_{ISCI}$R) from the UE. The network node 200 is configured to use the reported predicted UL quality metric from the UE 100 to assess whether a UE should operate using 1 or 2 TA loops.

Option B

According to the second implementation shown schematically in FIG. 7, a UE 100 operating within a network is configured to determine a UL quality metric threshold.

Accordingly, the UE 100 operating in accordance with such an implementation may be configured to compare the determined UL quality metric threshold with a calculated UE predicted UL quality metric. If the calculated predicted UL quality metric is within the determined UL quality threshold, the UE may be configured to report that operating using a single TA loop is sufficient. If the calculated predicted UL quality metric is not within the determined UL quality threshold, the UE may be configured to report that a single TA loop is not sufficient and that operation using, for example, two TA loops could improve the likelihood of uplink transmissions made by the UE being received successfully at a receiving mTRP node.

FIG. 7 shows, in the form of a signalling flow diagram, implementation options A and B described generally above. FIG. 7 shows signalling between UE 100 and a network node 200, for example, gNB. In the example implementations shown, new information is appended to existing messages.

Implementation according to Option A is shown on the left of FIG. 7 and shows a signalling flow according to which a UE is requested to report a calculated predicted UL quality metric to a network node, for example, gNB, and the network node is configured to take the final decision to configure 1 or 2 TA loops in relation to the UE based upon the reported predicted UL quality metric.

Implementation according to option B is shown on the right of FIG. 7 and shows a signalling flow according to which the UE is configured to be directly aware of an UL quality metric threshold. Direct awareness of the threshold which applies in relation to a network node, for example TRP, can enable a UE to compare a calculated predicted UL signal quality metric against the known threshold and make an assessment regarding whether implementation of 1 or 2 TA loops could be beneficial to the operation of the UE in the network. The UE can be configured to report that assessment back to a network node, for example, a gNB.

As shown in FIG. 7, the following signalling steps may be performed:

700A: a UE is configured to indicate to a network, for example using a UE Capability message, that the UE supports UL quality grouping of TCIs.

700B: In response to an awareness of UE capability, a network may be configured to provide the UE with an indication of Downlink Reference Signals (DL RSs) for measurement and reporting for downlink and/or uplink beam selection.

The UE is configured by the network, for example, by a gNB of the network, to perform predicted UL signal quality metric reporting as detailed further below.

## Option A

700C: According to Option A, the UE is configured by the gNB to report back one or more key parameter based upon which the gNB is configured to select whether to use 1 or 2 TA loop in relation to the UE. The configuration message from the network to the UE may, according to some implementations, include an indication of the gNB Sync Point (which is the gNB position within the CP of the first delay). As mentioned previously, that Sync Point can be gNB-implementation specific, and hence not known by UE unless the UE is directly told.

## Option B

700D: According to Option B, the UE is configured by the gNB such that the UE is further provided with UL quality metric threshold parameters, which supports an implementation according to which the UE offers some assistance in relation to assessment of whether a selection of 1 or 2 TA loops is appropriate to support operation of the UE within the network. In the example implementation shown in FIG. 7, the UE configuration parameters comprise thresholds for predicted interference thresholds, for example: P-ISCI and P-SI$_{ISCI}$R. Again, the configuration signalling may comprise an indication of the gNB UL sync point to assist the UE in the UL quality estimation.

The UE performs predicted UL signal quality metric reporting as detailed further below.

The UE is configured to calculate a prediction of how the TRP estimated UL PDP will look (for example, an estimated UL PDP such as that shown in FIG. 5D). The UE may be configured to calculate, based on an estimated UL PDP, a predicted UL signal quality metric. The predicted UL signal quality metric at a TRP takes into account interference attributable to UL TRP received misalignments due implementation at the UE of a single TA loop. Such a single TA loop can result in delay taps not falling within the CP length at a TRP.

The predicted UL quality metric may comprise and indication of: P-ISCI (predicted Inter Symbol and Carrier Interference); P-SI$_{ISCI}$R (predicted Signal to Interference and Noise Ratio) or similar. Alternatively, the predicted UL signal quality metric may comprise a predicted delay spread

## Option A

700E: The UE operating according to implementation of Option A is configured to calculate one or more of the predicted quality measures to the network.

## Option B

700F: The UE operating according to implementation of Option B is also configured to calculate one or more of the predicted quality measures to the network. The UE operating according to implementation of Option B is configured with knowledge of one or more UL quality metric thresholds. The UE is configured to compare the calculated predicted UL quality metric against the known threshold. In the event that the calculated predicted UL quality is within (better quality than) the UL quality thresholds configured by gNB, then the UE is configured to assess that use of a single TA loop is sufficient and return an indication of that assessment to the network. Similarly, in the event that the calculated predicted UL quality is outside (worse quality than) the UL quality thresholds configured by gNB, then the UE is configured to assess that use of a single TA loop is insufficient and return an indication of that assessment to the network. For example, if the predicted UL SINR is higher than a configured UL quality threshold for SINR, then the UE will assess that use of a single TA loop is sufficient, and vice-versa.

The UE assessment of step 700E (option A) or 700F (option B) is provided to the gNB using appropriate messaging.

## Option A

700G The UE operating according to implementation of Option A is configured to report via appropriate signaling to the network gNB to support the gNB in assessing whether the UE is a candidate for using 1 or 2 TA loops. That report comprises an indication of one or more of the predicted UL quality metric parameters estimated in step 700E. By way of example, the UE may be configured to report an estimated interference level, for example, the P-SINR or the P-ISCI.

## Option B

700H: The UE operating according to implementation of Option B is configured to report or signal to the network, for example, the gNB, the result of the assessment made by the UE in step 700F. According to some implementations, for each Downlink Reference Signal (DL RS) combination configured as a result of step 700B the UE may be configured to transmit an indication to the network regarding, for each combination, whether a single TA loop is sufficient or whether an additional TA loop could support more efficient network operation. The UE in accordance with some arrangements is configured to assess each combination depending on the appropriate configured UL quality thresholds for each combination.

700J: Arrangements may provide that a the gNB can configure a UE to operate using a second TA loop if it is determined that such a configuration is desirable to network operation. That determination may be based, depending upon implementation, on (i) the explicit value of predicted UL signal quality metric returned to the gNB in step 700G (Option A), or on (ii) the implicit indication of a predicted UL signal quality metric returned to the gNB in step 700H based on a comparison of the explicit value of predicted UL signal quality metric against a threshold (Option B).

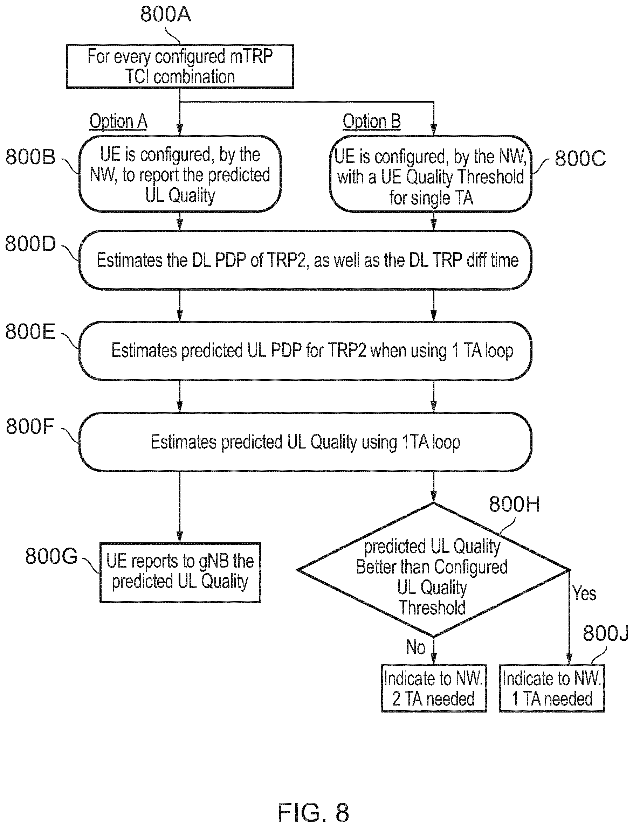

FIG. 8 is a flowchart illustrating schematically steps of some arrangements as implemented at a UE. The flowchart covers the two options Option A and Option B set out previously in relation to FIG. 7. By way of reminder, arrangements according to Option A are such that a UE is configured to report back to the network, for example, gNB, regarding one or more UE calculated predicted UL signal quality metric. That report can be used by the network to assist in a gNB decision regarding implementation of a single, or multiple TA loop in relation to operation of the UE.

Arrangements according to Option B are such that a UE is configured with one or more UL quality metric threshold and the UE is requested to provide a report to the network, for example, gNB, based on a comparison of an evaluated predicted UL signal quality metric against the one or more threshold. That indication or report sent from the UE to the network is indicative of whether, as assessed at the UE, a single TA loop is sufficient or whether more than one TA loop is required to fulfil the configured UL Quality Threshold. That report can be used by the network to assist in a gNB decision regarding implementation of a single, or multiple TA loop in relation to operation of the UE.

The procedure set out in FIG. 8 performed by the UE comprises the following steps:

800A: a UE, having reported a capability to perform UL signal quality metric prediction to a network, receives messaging from a network. That messaging configures the UE with a number of pairs of downlink signals to monitor. In particular, those pairs may comprise pairs of Transmission Configuration Indicator (TCI) states typically dynamically sent in a Downlink Control Information (DCI) message. The pairs comprise pairs of signals which are candidates for communication between the UE and the network in a mTRP configuration.

The Network then decides how to implement reporting of the UL signal quality metric prediction to a network:

800B: According to implementation of Option A, the network, for example, via gNB, is configured to request that the UE reports predicted UL quality. The UE is configured to receive such a reporting request and operate accordingly.

800C: According to implementation of Option B, the network, for example, via gNB, is operable to configure the UE with one or more UL quality metric threshold, for example, one threshold in relation to the signal pairs referred to in step 800A, and request that the UE operates to estimate a predicted UL signal quality metric and compare that estimation to the provided threshold(s).

The following assumes that the propagation delay between TRP and UE are symmetric and that the same channel PDP is assumed in DL and UL.

800D: The UE estimates, by way of evaluation of received signals, a downlink (DL) PDP (Power Delay Profile) for a channel based upon receiving signal from each of TRP1 and TRP2 (PDPTRP1 and PDPTRP2). The UE is also configured to estimate a time difference (Tdiff) between the signal received from TRP1 compared to the signal received from TRP2. The "receive" timing of each signal being the first delay tap in the PDP. This time difference is assumed to correspond to a propagation delay difference at the UE between the signals received from the two TRPs.

800E: Based on the measurements and estimates of 800D, a UE may be configured to estimate or evaluate a predicted UL power delay profile at TRP 2 (PDPTRP2) for an uplink signal sent to and received by TRP2, assuming that 1 TA loop is configured. The UE can calculate a predicted UL PDPTRP2, using the PDPTRP2 calculated in step 800D, and shift it in time according to the Tdiff calculated in step 800D. The predicted UL PDPTRP2 comprises a prediction of the PDP that TRP2 will see when receiving data from the UE in the case that the UE operates using a single TA loop.

800F: Using the predicted UL PDPTRP2, the UE may be configured to estimate a predicted UL signal quality metric at TRP2. That UL signal quality metric comprises an estimate of UL quality that TRP2 may experience in a case where the UE is configured with mTRP and implements a single TA loop based on a "primary" connection to TRP1. The predicted UL signal quality metric provides a mechanism to predict or estimate interference arising from any timing misalignment at TRP2 due to use at the UE of a single TA loop. The estimate does not take into account any other UL interference the gNB might receive. The predicted UL signal quality metric can be expressed using one or more of the following parameters:

P-ISCI (Predicted Inter Symbol and Carrier Interference)

Predicted power of the Inter Symbol and Carrier Interference caused by the UL timing misalignment.
P-SIISCIR (predicted Signal to ISCI Ratio)
Predicted Signal to Interference Ratio. Where the Signal is the desired signal, and the interference IISCI is the interference power as above.
P-DSmean (predicted mean Delay Spread)
The mean value of the Predicted Delay Spread, indicating the mean timing of the delay spread (DS).
P-DSrms (predicted rms Delay Spread)
The rms Delay Spread (DS) describes the dispersion of the predicted delay spread in time.

Having made an assessment of a predicted UL signal quality metric, the UE may be configured to take appropriate steps to report the result according to the configuration of the UE set at step 800B or 800C:

800G: According to an implementation of Option A, the UE may report explicitly a calculated value of the metric, or a range in which the value lies, to the network, for example, a gNB.

800H: According to an implementation of Option B, the UE may be configured to compare the predicted UL signal quality metric (Step 800F) with a configured UL Quality Threshold (Step 800C) and assess whether the predicted UL Quality is better than the UL Quality Threshold. By way of example, the UE may, for P-ISCI, assess whether a predicted ISCI is lower than the configured ISCI threshold.

800J: According to an implementation of Option B, the UE may be configured to indicate the result of the comparison to the network.

In order to support the methodologies illustrated in FIG. 7 and FIG. 8, arrangements provide a mechanism for a UE to estimate a predicted uplink signal quality metric. A numerical example of one example calculation is set out below.

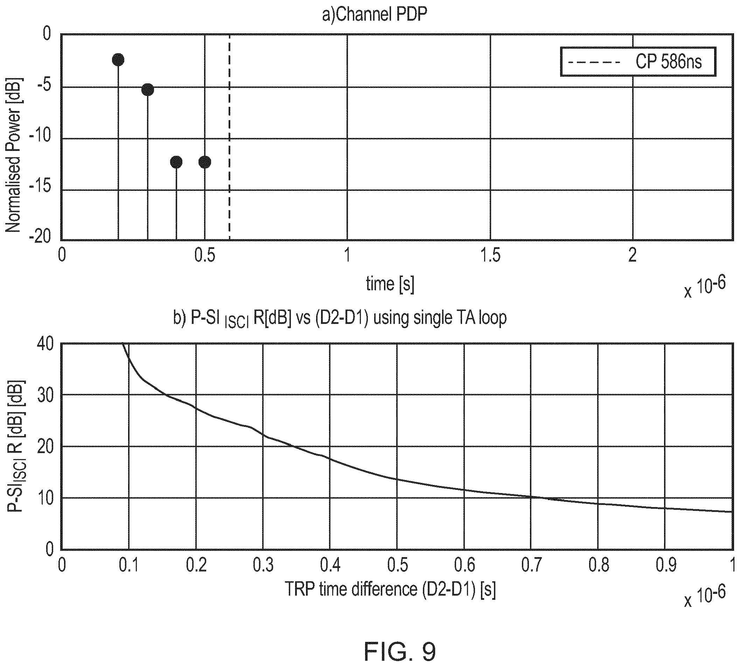

FIG. 9 illustrates graphically a numerical example of predicted UL signal quality metric example calculation.
FIG. 9 shows a numerical example of how an estimated indicator of signal quality, in this instance, P-SI$_{ISCI}$R, at a TRP changes as a propagation delay difference experienced by a UE between TRPs (D2-D1) is increased.
FIG. 9A shows graphically an example of a UE DL Power Delay Profile (PDP). The PDP has 4 taps all within the Cyclic Prefix (CP) length. When fully time synchronised with a first delay at approximately 1/3CP, the UE is configured with a TA loop based on the communication link(s) with TRP1 and the UL PDP profile is shown (as experienced at TRP1) in FIG 5C. A UE estimated P-SI$_{ISCI}$R is infinite since no inter-symbol and inter subcarrier interference is expected to be generated at TRP1. When using a single TA loop controlled by TRP1 it is assumed that TRP2 will receive an UE UL signal delayed by the TRP path difference (D2-D1). By using this assumption, the UE is able to make a prediction regarding an UL PDP$_{TRP2}$ for a given path difference (D2-D1). With knowledge of the predicted UL PDP at TRP2 the UE can then make an estimate for a predicted P-SI$_{ISCI}$R.
FIG. 9B shows an estimated P-SI$_{ISCI}$R for the case that a UE implements a single TA loop. At D2-D1=0 the P-SI$_{ISCI}$R starts at 40dB (hardware limitation) since no taps are outside CP length (hence no interference). At 0.086us the last tap (with highest delay) of the PDP hits the CP length. When the propagation delay difference between the two TRPs increases further (D2-D1 increases) the P-SI$_{ISCI}$R decreases as more tap power received at TRP2 sits outside of a CP length.

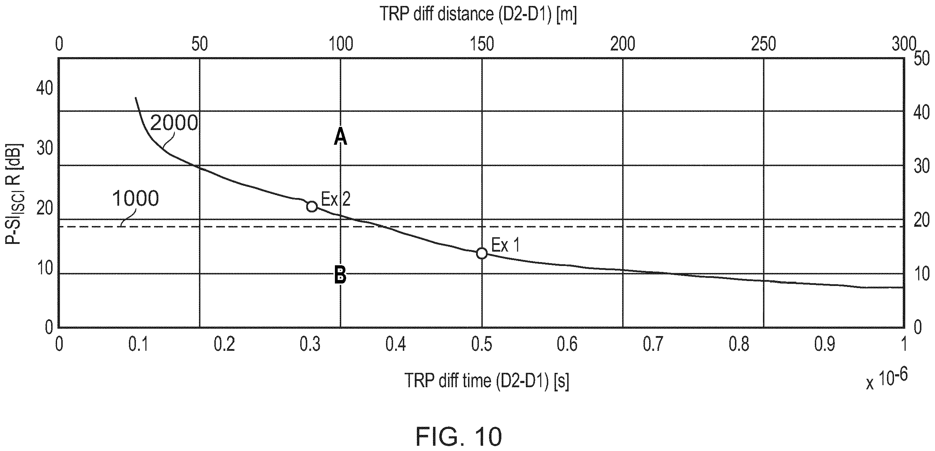

FIG. 10 illustrates graphically how a predicted UL signal quality metric at a TRP changes in a m-TRP network as a difference between a first and second TRP and a UE increases.
FIG. 10 shows a predicted UL signal quality metric (y-axis) at TRP 2 calculated as a function of difference in propagation time between TRP1 and TRP2 (x-axis). In the example illustrated the predicted UL signal quality metric is P-SI$_{ISCI}$R and is represented by line 2000. The line 1000 indicates a configured UL quality threshold metric measured in SI$_{ISCI}$R. The line represents the quality at which it becomes difficult for TRP2 to decode an UL signal if the UE is using only a single TA loop. Region A (above line 1000) indicates an UL signal quality at which a single TA loop is sufficient for successful reception of UL signals at TRP2. Region B (below line 1000) indicates an UL signal quality at which a single TA loop is no longer sufficient for successful reception of UL signals at TRP2.for the UE and a second TA loop would be of assistance.
Example 1 (Ex 1): A UE estimates a DL TRP time difference between TRP1 and TRP2 of 0.5us. That estimate is based upon reception of a DL signal from each of TRP1 and TRP2. In the example illustrated, Option B shown in FIG. 7 and FIG. 8 is implemented and the UE has been configured such that the "threshold" is 18dB. Based on the UE calculation of P-SI$_{ISCI}$R the UE is configured to calculate a value and compare it to the threshold and subsequently report to the network that a single TA loop is not sufficient and, for example 2 TA loops may be required.
Example 2 (Ex 2): A UE estimates a DL TRP time difference between TRP1 and TRP2 of 0.3us. That estimate is based upon reception of a DL signal from each of TRP1 and TRP2. In the example illustrated, Option B shown in FIG.

7 and FIG. 8 is implemented and the UE has been configured such that the "threshold" is 18dB. Based on the UE calculation of P-SI$_{ISCI}$R the UE is configured to calculate a value and compare it to the threshold and subsequently report to the network that a single TA loop is sufficient.

If only the CP length were taken into account, such that any propagation delay between theTRP1 and TRP2 greater than a CP would mean implementation of a second TA loop, then a network would configure 2 TA loops in both Ex 1 and Ex 2. However, according to arrangements which make a prediction of UL signal quality at TRP2, it can be seen that the configuration of Ex 2 can still support UE operation with a single TA loop even though the UL PDP received at TRP2 is received outside a CP length.

Arrangements provide a soft metric for implementation by a UE of a single or more than one TA loop. The soft metric is configurable by a network with appropriate UL quality threshold signalling.

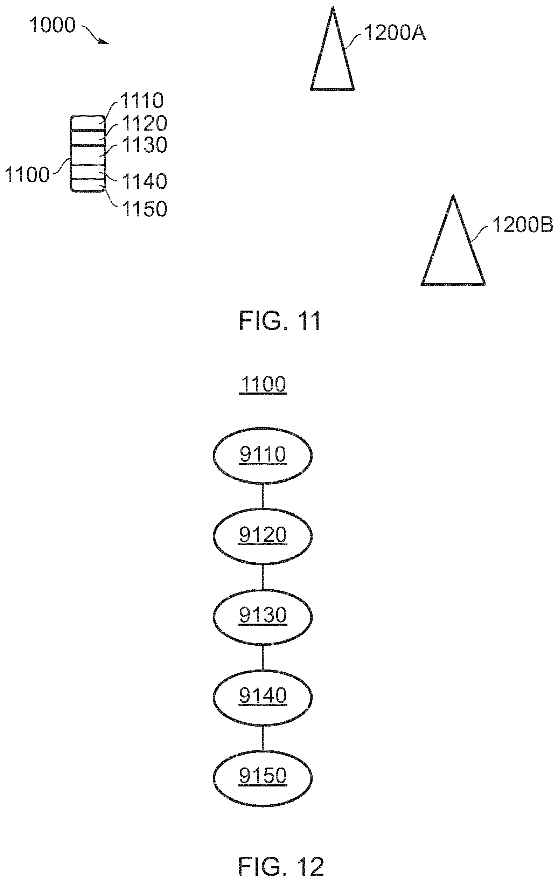

FIG. 11 illustrates schematically some components of a network including nodes according to some arrangements; and FIG. 12 illustrates schematically steps of methods performed in accordance with some arrangements.

FIG. 11 illustrates schematically some components of a network including nodes according to some arrangements. The network 1000 comprises a plurality of TRPS 1200A, 1200B in communication with user equipment 1100.

The user equipment 1100 takes the form of an apparatus, comprising:

means for transmitting 1110, to a network node, an indication that a plurality of timing advance loops are supported;
means for receiving 1120, from the network node, a configuration for measuring downlink reference signals;
means for performing measurements 1130 on the downlink reference signals according to the configuration;
means for evaluating 1140, based on the measurements, an indication of a predicted uplink signal quality metric at a further network node based upon use of a common timing advance loop; and
means for transmitting 1150, to the network node, an indication of the evaluated indication of a predicted uplink signal quality metric at the further network node.

FIG. 12 illustrates schematically steps of methods performed in accordance with some arrangements.

The user equipment 1100 may be configured to perform a method comprising the steps of:

9110: transmitting, to a network node (1200A), an indication that a plurality of timing advance loops are supported;
9120: receiving, from the network node (1200A), a configuration for measuring downlink reference signals;
9130: performing measurements on the downlink reference signals according to the configuration;
9140: evaluating, based on the measurements, an indication of a predicted uplink signal quality metric at a further network node (1200B) based upon use of a common timing advance loop; and
9150: transmitting, to the network node (1200A), an indication of the evaluated indication of a predicted uplink signal quality metric at the further network node (1200B).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1.  An apparatus (1100), comprising

    means for transmitting (1110), to a network node, an indication that a plurality of timing advance loops are supported;
    means for receiving (1120), from the network node, a configuration for measuring downlink reference signals;
    means for performing measurements (1130) on the downlink reference signals according to the configuration;
    means for evaluating (1140), based on the measurements, an indication of a predicted uplink signal quality metric at a further network node based upon use of a common timing advance loop; and
    means for transmitting (1150), to the network node, an indication of the evaluated indication of a predicted uplink signal quality metric at the further network node, wherein:
    the means for evaluating the indication of a predicted uplink signal quality metric at a further network node is configured to:
    predict an uplink power delay profile at the further network node based upon reception of a downlink reference signal from each of the network node and further network node and the common timing advance loop.

2.  An apparatus (1100) according to claim 1, wherein the means for evaluating the indication of a predicted uplink signal quality metric at a further network node is configured to:
    evaluate interference at the further network node as a result of use of the common timing advance loop.

3.  An apparatus (1100) according to any preceding claim, wherein predicting the uplink power delay profile at the further network node comprises:

    determining the common timing advance loop for communication with the network node;
    calculating a difference in downlink reference signal reception time between a downlink reference signal received from the network node and a downlink reference signal received from the further network node;
    estimating a further network node downlink power delay profile based upon the downlink reference signal received from the further network node; and
    predicting the uplink power delay profile at the further network node based upon the estimated further network node downlink power delay profile, the calculated difference in downlink reference signal reception time, and the determined common timing advance loop.

4.  An apparatus (1100) according to any preceding claim, wherein the means for evaluating the indication of a predicted uplink signal quality metric at a further network node is configured to:
    evaluate the indication of a predicted uplink signal quality metric at the further network node in dependence upon the predicted uplink power delay profile at the further network node.

5. An apparatus (1100) according to any preceding claim, wherein the means for evaluating the indication of a predicted uplink signal quality metric at the further network node is configured to evaluate a predicted indication of interference or an indication of uplink signal spread, at the further network node as a result of use of the common timing advance loop.

6. An apparatus (1100) according to any preceding claim, wherein the indication of a predicted uplink signal quality metric comprises: predicted inter symbol and carrier interference at the further network node; and/or predicted signal to inter symbol and carrier interference ratio at the further network node; and/or predicted mean delay signal spread at the further network node, and/or a predicted root mean square delay signal spread at the further network node.

7. An apparatus (1100) according to any preceding claim, wherein the configuration for measuring downlink reference signals comprises: an indication of a synchronisation point for the network node assuming the common timing advance loop.

8. An apparatus (1100) according to any preceding claim, wherein the apparatus comprises:
means to determine a threshold predicted uplink quality metric.

9. An apparatus (1100) according to claim 8, wherein the means to determine the threshold predicted uplink quality metric is configured to determine the threshold predicted uplink quality metric based on reception of a radio resource configuration RRC configuration from the network; a dynamic indication from the network; or a preconfigured value known to the apparatus.

10. An apparatus (1100) according to claim 8 or claim 9, wherein the apparatus comprises:
comparison means for comparing the evaluated indication of a predicted uplink signal quality metric at a further network node against the threshold predicted uplink quality metric.

11. An apparatus (1100) according to any preceding claim, wherein the transmitted indication of the evaluated indication of a predicted uplink signal quality metric at the further network node comprises an indication of whether the predicted uplink signal quality metric is above or below the threshold.

12. An apparatus (1100) according to any preceding claim, wherein the means for evaluating is further configured to assess, based on the indication of predicted uplink signal quality metric at a further network node, whether it is sufficient to use the common timing loop; and wherein the means for transmitting is configured to transmit the indication of the evaluated indication of the predicted uplink signal quality metric at the further network node by indicating whether it is sufficient to use the common timing loop.

13. An apparatus (1100) according to claim 12, wherein if the means for evaluating assesses, based on the indication of predicted uplink signal quality metric at a further network node, that it is not sufficient to use the common timing loop; the means for transmitting is configured to transmit the indication of the evaluated indication of the predicted uplink signal quality metric at the further network node by indicating that the common timing loop is insufficient.

14. An apparatus (1100) according to any preceding claim, wherein the means comprise: at least one processor; and at least one memory storing instructions that, when executed by the at least one processor, cause the performance of the apparatus.

15. A method, comprising:

transmitting (9110), to a network node, an indication that a plurality of timing advance loops are supported;
receiving (9120), from the network node, a configuration for measuring downlink reference signals;
performing (9130) measurements on the downlink reference signals according to the configuration;
evaluating (9140), based on the measurements, an indication of a predicted uplink signal quality metric at a further network node based upon use of a common timing advance loop; and
transmitting (9150), to the network node, an indication of the evaluated indication of a predicted uplink signal quality metric at the further network node;
wherein evaluating the indication of a predicted uplink signal quality metric at a further network comprises:
predicting an uplink power delay profile at the further network node based upon reception of a downlink reference signal from each of the network node and further network node and the common timing advance loop.

**16.** A computer program product operable, when executed on a computer, to perform the method of claim 15.

FIG. 1A

FIG. 1B

FIG. 2

FIG. 3A

FIG. 3B

FIG. 3C

FIG. 3D

FIG. 3

FIG. 4A

TRP1 — TRP DL TX (TRP1)

TRP2 — TRP DL TX (TRP2)

FIG. 4B

D1 — UE DL RX (UE)

D2 — UE DL RX (UE)

FIG. 4C

TA1
D1 — D1
UE UL TX

TA1
D1 — D1
UE UL TX

D1 — TRP UL RX

D2 — TRP UL RX

2xD2-2xD1

TRP2

200

TRP1

D2

D1

UE

100

FIG. 4

EP 4 429 339 A1

FIG. 5A

FIG. 5B

FIG. 5C

FIG. 5D

FIG. 5E

FIG. 5F

FIG. 5

FIG. 6

EP 4 429 339 A1

**Option A**

| 100 | | 200 |
|-----|---|-----|
| UE | | gNB |

700A — UE capability: support for two independent TA loops and support UL quality grouping of TCIs →

700B — Configure UE with the DLRSs for measurement and reporting for DL and / or UL beam selection

700C — Configure UE to report key parameters, for gNB to assess whether 1 or 2 TA loops are needed. Parameter: gNB Sync Point (Optional)

UE calculates key parameters for single vs. two TA loop: UE reporting KPI

P-ISCI, P-SI$_{ISCI}$R

i TRP SINR, iTRP Delay Spread, iTRP Mean Spread, iTRP Delay — 700E

Report the predicted UL quality parameters: P-ISCI, P-SIISCIR, P-DSrms, P-DSmean →

700G — Configure UE with the second TA loop (first one is in use from the RACH already)

700J

**Option B**

| 100 | | 200 |
|-----|---|-----|
| UE | | gNB |

700A — UE capability: support for two independent TA loops and support UL quality grouping of TCIs →

Configure UE with the DLRSs for measurement and reporting for DL and / or UL beam selection — 700B

Configure UE with UL quality threshold, to asses whether 1 or 2 TA loops are needed. Parameters: UE quality thresholds, gNB Sync Point (Optional),??? — 700D

Predicted UL quality < Threshold -Report 2 TA loops Else -Report 1 TA loop — 700F

Report whether 1 or 2 TA loops are needed →

Configure UE with the second TA loop (first one is in use from the RACH already) — 700H

700J

FIG. 7

**800A**

For every configured mTRP
TCI combination

Option A

**800B** — UE is configured, by the NW, to report the predicted UL Quality

Option B

UE is configured, by the NW, with a UE Quality Threshold for single TA — **800C**

**800D** — Estimates the DL PDP of TRP2, as well as the DL TRP diff time

**800E** — Estimates predicted UL PDP for TRP2 when using 1 TA loop

**800F** — Estimates predicted UL Quality using 1TA loop

**800G** — UE reports to gNB the predicted UL Quality

**800H**

predicted UL Quality Better than Configured UL Quality Threshold

Yes

No

**800J**

Indicate to NW. 2 TA needed

Indicate to NW. 1 TA needed

FIG. 8

a)Channel PDP

b) P-SI $_{ISCI}$ R[dB] vs (D2-D1) using single TA loop

EP 4 429 339 A1

FIG. 9

FIG. 10

1000

1200A

1110
1120
1130
1100
1140
1150

1200B

FIG. 11

1100

9110

9120

9130

9140

9150

FIG. 12

Europäisches
Patentamt

European
Patent Office

Office européen
des brevets

# EUROPEAN SEARCH REPORT

**Application Number**

EP 24 15 7800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MIHAI ENESCU ET AL: "Two TAs for UL multi-DCI multi-TRP operation", 3GPP DRAFT; R1-2212168; TYPE DISCUSSION; NR_MIMO_EVO_DL_UL-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Toulouse, FR; 20221114 - 20221118 7 November 2022 (2022-11-07), XP052222731, Retrieved from the Internet: URL:https://www.3gpp.org/ftp/TSG_RAN/WG1_R L1/TSGR1_111/Docs/R1-2212168.zip R1-2212168 Two TAs for UL multi-DCI multi-TRP operation.docx [retrieved on 2022-11-07] * the whole documents, in particular, section 2.6 * | 1-16 | INV. H04W56/00 |
| | ----- | | |
| A | NOKIA ET AL: "Two TAs for UL multi-DCI multi-TRP operation", 3GPP DRAFT; R1-2204539, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e Meeting; 20220509 - 20220520 29 April 2022 (2022-04-29), XP052153576, Retrieved from the Internet: URL:https://ftp.3gpp.org/tsg_ran/WG1_RL1/T SGR1_109-e/Docs/R1-2204539.zip R1-2204539.docx [retrieved on 2022-04-29] * the whole document * | 1-16 | TECHNICAL FIELDS SEARCHED (IPC) H04W H04B |
| | ----- | | |
| | -/-- | | |

The present search report has been drawn up for all claims

| Place of search | Date of completion of the search | Examiner |
|---|---|---|
| The Hague | 16 July 2024 | Arroyo Valles, |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 15 7800

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/239429 A1 (ZHU DALIN [US] ET AL) 28 July 2022 (2022-07-28) * figures 8, 9 * * paragraph [0093] - paragraph [0095] * * paragraph [0133] - paragraph [0149] * * paragraph [0172] - paragraph [0181] * * paragraph [0187] * ----- | 1-16 | |
| A | US 2022/210825 A1 (ZHU DALIN [US] ET AL) 30 June 2022 (2022-06-30) * figures 8, 9 * * paragraph [0114] - paragraph [0128] * ----- | 1-16 | |

TECHNICAL FIELDS
SEARCHED      (IPC)

The present search report has been drawn up for all claims

| Place of search | Date of completion of the search | Examiner |
|---|---|---|
| The Hague | 16 July 2024 | Arroyo Valles, |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 24 15 7800

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2024

| Patent document cited in search report | | Publication date | Patent family member(s) | | Publication date |
|---|---|---|---|---|---|
| US 2022239429 | A1 | 28-07-2022 | CN | 116830485 A | 29-09-2023 |
| | | | KR | 20230134123 A | 20-09-2023 |
| | | | US | 2022239429 A1 | 28-07-2022 |
| | | | WO | 2022164195 A2 | 04-08-2022 |
| US 2022210825 | A1 | 30-06-2022 | EP | 4248689 A1 | 27-09-2023 |
| | | | US | 2022210825 A1 | 30-06-2022 |
| | | | WO | 2022145995 A1 | 07-07-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. STEENDAM ; M. MOENCLAEY.** Analysis and Optimization of the Performance of OFDM on Frequency-Selective Time-Selective Fading Channels. *IEEE Trans. Commun.,* December 1999, vol. 47, 1811-1819

- **M. BATARIERE ; K. BRAUM ; T. P. KRAUSS.** Cyclic Prefix Length Analysis for 4G OFDM Systems. *VTC'04, Los Angeles, USA,* September 2004